(19) Europäisches Patentamt
European Patent Office
Office européen des brevets

(11) **EP 3 545 056 B1**

(12) **FASCICULE DE BREVET EUROPEEN**

(45) Date de publication et mention
de la délivrance du brevet:
**05.01.2022 Bulletin 2022/01**

(21) Numéro de dépôt: **17801474.2**

(22) Date de dépôt: **23.11.2017**

(51) Int Cl.:
*C10L 5/14* *(2006.01)*    *C10L 5/36* *(2006.01)*
*C10L 5/44* *(2006.01)*    *C10J 3/66* *(2006.01)*

(86) Numéro de dépôt international:
**PCT/EP2017/080262**

(87) Numéro de publication internationale:
**WO 2018/096056 (31.05.2018 Gazette 2018/22)**

(54) **PROCEDE DE TRAITEMENT D'UNE POUDRE DE BIOMASSE PAR GRANULATION HUMIDE**

VERFAHREN ZUR VERARBEITUNG EINES BIOMASSEPULVERS DURCH NASSGRANULATION

METHOD FOR PROCESSING A BIOMASS POWDER BY WET GRANULATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.11.2016 FR 1661477**

(43) Date de publication de la demande:
**02.10.2019 Bulletin 2019/40**

(73) Titulaire: **Commissariat à l'Énergie Atomique
et aux Énergies Alternatives
75015 Paris (FR)**

(72) Inventeurs:
• **VANNESTE-IBARCQ, Clément
38000 Grenoble (FR)**
• **GONZALEZ-MARTINEZ, Maria
38700 Corenc (FR)**

(74) Mandataire: **Nony
11 rue Saint-Georges
75009 Paris (FR)**

(56) Documents cités:
WO-A1-2013/114327    DE-A1-102013 019 090
RU-C2- 2 602 150

• Vikramaditya Yandapalli: "GRANULATION OF
LIGNOCELLULOSIC POWDERS", , 1 janvier 2013
(2013-01-01), XP055339717, Athens, Georgia
Extrait de l'Internet:
URL:https://getd.libs.uga.edu/pdfs/yandapa
lli_vikramaditya_201305_ms.pdf [extrait le
2017-01-27] cité dans la demande

EP 3 545 056 B1

**Description**

Domaine technique

La présente invention concerne le domaine général de la gazéification de la biomasse, plus particulièrement de la biomasse ligno-cellulosique.

Par « biomasse », on entend ici et dans le cadre de l'invention, c'est-à-dire tout matériau inhomogène d'origine végétale contenant du carbone, tel que de la biomasse ligno-cellulosique, des résidus forestiers ou agricoles (paille), ou des déchets ménagers. Toutes ces charges peuvent être sèches ou humides.

L'invention a plus particulièrement trait au traitement de biomasse préalablement broyée sous forme de poudre, en vue de son injection sous forme pulvérisée dans un réacteur de gazéification en aval.

L'invention s'applique avantageusement à la gazéification de biomasse en vue de la réalisation de biocarburants à partir du gaz de synthèse largement connu sous l'appellation Syngaz.

Etat de la technique

Le traitement mécanique de la biomasse (tronc d'arbre, balles de paille) comprend classiquement une première étape de broyage grossier, en général sur le lieu même de la récolte, qui permet notamment de faciliter le transport et d'en réduire son coût. Cette première étape de broyage est réalisée au moyen de déchiqueteuse (en anglais « *shredder* ») et conduit à des particules de dimensions centimétriques ou millimétriques, typiquement des plaquettes forestières dans les filières bois. Elle est réalisée au moyen de broyeurs à la technologie éprouvée (broyeur à marteaux, à couteaux ou à ciseaux). Les particules ainsi broyées grossièrement constituent ainsi ce que l'on appelle les intrants dans les voies de gazéification ou de combustion de biomasse (cogénération de chaleur et d'électricité, production de chaleur, production de biocarburants).

Les procédés actuels en cours d'étude ou à l'échelle de pilote industriel, permettant de convertir par voie thermochimique la biomasse comprennent nécessairement une étape de gazéification de la biomasse pour obtenir un gaz de synthèse contenant du monoxyde de carbone (CO) et de l'hydrogène (H2).

L'étape de gazéification proprement dite est réalisée en continu à partir de la biomasse de nature et de granulométrie différentes stockée habituellement à la pression atmosphérique.

Ainsi, les procédés de gazéification de la biomasse ligno-cellulosique permettent de générer un gaz de synthèse qui permet de produire en aval soit des carburants liquides soit d'autres produits organiques. Cette gazéification se déroule en présence typiquement de vapeur d'eau vers 1400-1600°C pour des réacteurs à flux entrainé. Classiquement, ces procédés convertissent le carbone de la biomasse avec un gaz en sortie du gazéifieur avec une composition moyenne de 20-25 % en CO, 8-12 % en $CH_4$, 18-22 % en $CO_2$ et environ 38-42 % en $H_2$ et, des composés organiques $C_2$ à $C_{16}$ plus des composés inorganiques.

A ce jour, pour une application de gazéification de la biomasse dans un réacteur de type réacteur à flux entrainé, les particules de biomasse nécessitent un broyage fin pour la mettre sous forme de poudre, typiquement pour qu'elles atteignent une taille comprise entre 30 et 300 microns. Une fine poudre de biomasse, en particulier une biomasse ligno-cellulosique, permet intrinsèquement un temps de séjour court, de l'ordre de la seconde, à l'intérieur du réacteur de gazéification.

Un certain nombre d'études est consacré au broyage fin de particules de biomasse, notamment de plaquettes forestières, pour atteindre des granulométries du millimètre au micron selon les cas. Dans ces études, les effets de la nature de la biomasse, du type de broyeur(s) utilisé(s), de la granulométrie désirée ont été caractérisés sur le coût énergétique de l'opération proprement dite de broyage fin, et/ou les propriétés de la poudre obtenue (distribution granulométrique, forme des particules).

Mais, quel que soit le broyage fin réalisé, une poudre de biomasse présente néanmoins des inconvénients.

Tout d'abord, la poudre de biomasse, en particulier de bois, est cohésive, ce qui implique qu'elle s'écoule difficilement du fait de l'attraction par forces de van der Waals et forces électrostatiques, et de la forme allongée des particules de poudre. En outre, de nombreuses étapes de manipulation d'une poudre de biomasse sont nécessaires en amont du gazéifieur, comme le stockage, la décharge, le convoyage, et enfin l'injection dans le gazéifieur. Du fait du caractère cohésif de la poudre de biomasse, on rencontre des difficultés techniques à chacune de ces étapes.

A ce jour, en partie du fait que le convoyage d'une poudre de biomasse s'heurte toujours à des difficultés, le procédé de gazéification de la biomasse, plus particulièrement de biomasse ligno-cellulosique, n'a pas connu de développement à l'échelle industrielle

La technique de granulation des poudres est connue et maitrisée dans le domaine de l'industrie pharmaceutique, notamment pour la fabrication des comprimés et granulés pour sachets. La granulation a pour fonction de transformer des particules de poudres en agrégats solides plus ou moins résistants et plus ou moins poreux, appelés couramment granulés.

Par rapport à un simple mélange de poudres, des granulés présentent un certain nombre d'avantages dont un meilleur écoulement, en raison de l'augmentation de la densité et de la taille des particules par la formation d'un granulé et à la modification de la forme et de l'état de surface de ces particules.

La granulation par voie humide est particulièrement efficace. Elle consiste en une mise en mouvement et une agitation des particules d'un mélange de poudres ou d'une poudre avec un liant sous la forme d'un liquide de mouillage, afin d'en obtenir leur agglomération. Cette étape d'agitation mécanique est suivie d'une étape de séchage des granulés obtenus. L'étape de séchage permet de diminuer le taux d'humidité à une valeur adaptée pour obtenir la mise en forme.

Plusieurs technologies peuvent être mises en œuvre pour la granulation humide. On pourra se référer aux publications [1] et [2].

Parmi celles-ci, on peut citer les granulateurs à assiette tournante qui ont pour principaux avantages d'être simple à mettre en place de permettre un séchage en même temps que la granulation.

Les granulateurs-mélangeurs à fort taux de cisaillement dont la gamme de géométries disponibles est très variée permettent par leur compacité, d'obtenir des granulés denses et moins sphériques que les autres technologies, mais utilisent moins de liquide de mouillage. Les granulateurs à arbre central d'agitation mécanique peuvent produire des granulés de taille comprise entre 0,5 et 1mm. Les temps de séjour sont de quelques secondes. Les granulateurs à arbre central sont le plus souvent reliés en aval à des mélangeurs à plus long temps de séjour et à faible cisaillement qui permettent de continuer la croissance et la densification des granulés.

L'auteur de la publication [3] s'est intéressé à la granulation humide de particules de biomasse pour une production de granulés à utiliser en tant que combustibles. Les liants utilisés décrits dans cette publication, sont de plusieurs natures différentes : il peut s'agir de déchets d'usine de papier, de lignine, bentonite, huiles de pyrolyse ou encore d'amidon. De cette publication [3], il ressort que l'amidon présente les meilleures performances en termes de capacité à lier les particules, le contenu en cendres après combustion des granulés obtenus, de coût ou encore de disponibilité. L'auteur de cette publication s'intéresse surtout à l'augmentation de la densité des granulés de biomasse ligno-cellulosique, en vue d'améliorer leur manipulation, transport et stockage à des fins exclusivement de combustion.

WO 2013/114327 A1 divulgue un procédé de broyage fin d'une charge de matière carbonée selon lequel on introduit la charge de matière carbonée sous forme de particules de dimensions millimétriques ou microniques en entrée d'une chambre de broyeur de type vibrant, le broyeur vibrant comprenant des corps de broyage logés de façon libre à l'intérieur de la chambre et adaptés pour broyer des particules, procédé selon lequel on met en vibration la chambre de sorte à concasser les particules introduites d'une part entre les corps de broyage et d'autre part entre ceux-ci et la paroi interne périphérique de la chambre.

Il existe donc un besoin général d'améliorer le procédé de gazéification de biomasse, en particulier de biomasse ligno-cellulosique, afin de surmonter les inconvénients actuels liés aux poudres cohésives de biomasse, avant leur injection dans un réacteur de gazéification.

Il existe un besoin particulier d'une solution qui réponde au besoin général, qui soit simple à mettre en œuvre et peu coûteuse, notamment qui puisse être intégrée sans modifications substantielles dans une installation de gazéification en continu.

Le but de l'invention est de répondre au moins en partie à ce besoin.

Exposé de l'invention

Pour ce faire, l'invention concerne, sous un de ses aspects, un procédé de gazéification de biomasse, comprenant les étapes successives suivantes :

a/ séchage d'une biomasse ;
b/ broyage de la biomasse afin d'obtenir une poudre sèche,
c/ granulation humide de la poudre de biomasse pour obtenir des granulés de biomasse sous la forme d'une semoule ;
d/ séchage des granulés de semoule ;
e/ injection de la semoule sèche dans un réacteur de gazéification.

Par « granulés de semoule », on entend ici et dans le cadre de l'invention un produit dont la matière première est de la biomasse et qui est obtenu par mouture grossière de grains humidifiés par granulation humide d'une poudre séchée de biomasse, qui est suivie d'une étape séchage et le cas échéant d'une étape de tamisage.

L'étape e/ est de préférence une injection dans un réacteur de gazéification à flux entraîné (RFE).

La biomasse peut être avantageusement de la biomasse ligno-cellulosique.

Dans le cadre de l'invention, il est possible de réaliser l'étape c/ de granulation humide avec ou sans liant. Dans la plupart des cas, il est préférable d'avoir un liant.

Le liant peut être compris en tant que tel dans la biomasse à gazéifier. Par exemple, lorsque la biomasse est constituée de déchets de canne à sucre, il n'est pas nécessaire de rajouter un liant supplémentaire car les déchets de canne à sucre contiennent déjà un liant qui est le sucre contenu.

En revanche, pour certains types de biomasse, on peut procéder avantageusement à l'ajout d'un liant en supplément de la biomasse.

Ainsi, selon un mode de réalisation avantageux, l'étape c/ de granulation humide est réalisée par ajout à la poudre d'un liant choisi parmi l'amidon, la drêche de féculerie, des déchets agricoles comprenant des déchets de canne à sucre et/ou des pépins de raisin, et/ou des drêches de palmier à huile et/ou des déchets de sorgho et/ou des grignons d'olive et/ou des coques de graines de tournesol, des écorces d'agrumes, des micro-algues, des algues, du lactosérum ou un mélange de ceux-ci.

Les inventeurs ont procédé à différentes analyses de type thermogravimétrique (ATG) : on pourra se reporter à la publication [4] pour les protocoles et appareils d'essais utilisés.

De de ces analyses, ils ont pu en déduire que :

- l'amidon est avantageux à mettre en œuvre, car il se dégrade en même temps que le bois;
- le lactosérum i fonctionne très bien en tant que liant, car il se dégrade avant le bois, sous l'effet de la chaleur. Ainsi, cela permet d'envisager que des granulés de biomasse liés par du lactosérum s'effritent lors de leur injection dans le réacteur de gazéification des températures élevées qui y règnent typiquement entre 1200 et 1600°C, et forment à nouveau une poudre dont les particules présentent un diamètre parfaitement adapté, typiquement inférieur à 1 mm, pour subir la gazéification, et donc avantageusement sans aucune augmentation de leur temps de séjour dans le réacteur. En outre, le lactosérum a pour avantage supplémentaire de ne pas nécessiter de préparation préalable et ainsi de pouvoir être versé directement en tant que liant liquide sur la poudre séchée de biomasse.

La proportion massique de liant par rapport à celle de la poudre peut être comprise entre 0 et 90%.

Selon une variante avantageuse, un liquide, de préférence de l'eau, est ajouté directement par pulvérisation dans le mélange entre liant et poudre.

Selon une autre variante avantageuse, le liant est mélangé à un liquide, de préférence de l'eau, le mélange étant éventuellement chauffé de sorte à obtenir un gel ajouté par pulvérisation dans la poudre. Lorsque le liant est l'amidon, le chauffage du mélange est nécessaire.

Dans le cas où le liant est l'amidon, sa proportion massique est avantageusement comprise entre 5 et 10% de celle de la poudre.

Le procédé peut comprendre en outre, après l'étape d/, une étape dl/ de tamisage de la semoule séchée. Le tamisage peut être réalisé lorsqu'au moins une partie des granulés obtenus au préalable ont des dimensions qui ne permettent pas de respecter les spécifications de temps de séjour courts pour la réaction de gazéification.

De préférence, les granulés secs obtenus, éventuellement après l'étape dl/ de tamisage, et avant l'étape d'injection e/, ont un diamètre représentatif inférieur à 1 mm.

L'invention a également pour objet, selon un autre de ses aspects, une installation gazéification en continu de biomasse comprenant un réacteur de gazéification et en amont de celui-ci un dispositif de mise en œuvre de la granulation humide de poudre séchée de biomasse, destinée à mettre en œuvre l'étape c/ du procédé décrit précédemment.

L'invention est particulièrement avantageuse à mettre en œuvre dans une installation comprenant un réacteur à flux entrainé (RFE), avec un dispositif constitué par un granulateur à plateau tournant ou un granulateur-mélangeur à fort taux de cisaillement, le réacteur étant un réacteur de type à flux entraîné.

Ainsi l'invention consiste essentiellement à introduire une étape de granulation humide de la poudre séchée de biomasse avant l'étape d'injection dans le réacteur de gazéification.

De par la modification de la forme et l'augmentation de la taille induites par la granulation, les granulés de biomasse formant une semoule ont des propriétés d'écoulement grandement améliorées par rapport à une poudre séchée de biomasse.

Le convoyage de la biomasse est ainsi grandement amélioré ce qui permet d'obtenir une injection aisée et en continu dans le réacteur de gazéification, avec un dosage fin, précis, stable et reproductible.

Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes, parmi lesquelles :

- la figure 1 est une vue d'un organigramme d'enchaînement des opérations et des états de la biomasse ligno-cellulosique qui en résultent dans un procédé de gazéification selon l'invention;
- la figure 2 est une reproduction photographique des granulés de bois formant une semoule obtenue selon l'étape de granulation humide de l'invention;

- la figure 3 montre des courbes de distribution granulométriques d'exemples de semoules de granulés de bois selon l'invention et d'un exemple comparatif d'une poudre du même bois selon l'état de l'art ;
- la figure 4 montre sous forme de courbes les lieux d'écoulement, c'est-à-dire qui traduisent l'évolution des contraintes de cisaillement en fonction des contraintes normales, d'un exemple de semoule de granulés de bois selon l'invention et d'exemples comparatifs de poudres du même bois selon l'état de l'art.

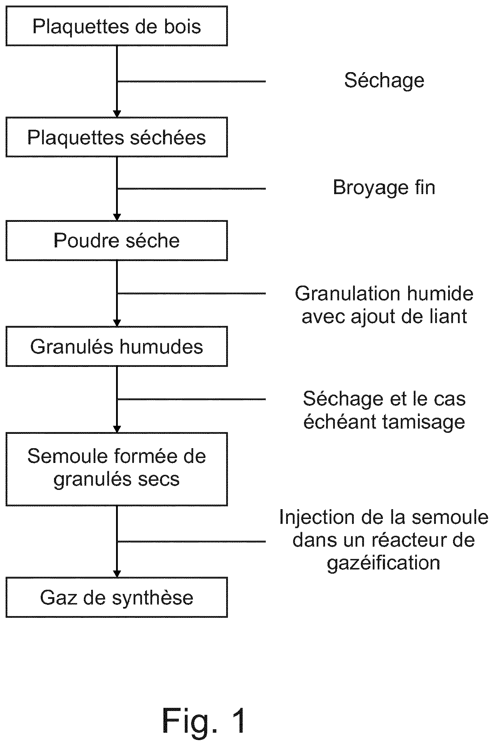

On précise que les termes « amont », « aval », « entrée », « sortie » utilisés en référence avec la figure 1 sont à considérer par rapport au sens de circulation de la biomasse ligno-cellulosique dans une installation de gazéification en continu selon l'invention.

On précise également que les termes d10, d50, d95, dX, désignent les diamètres des particules tels que respectivement 10%, 50%, 95%, X% en volume du matériau solide de biomasse soit de taille inférieure.

On précise également que la mesure de la densité aérée qui est le rapport entre la masse d'un échantillon et le volume initial de l'échantillon, pour les exemples de poudres séchées selon l'état de l'art et les exemples de semoules de granulés selon l'invention est faite selon une même méthode et avec un même appareil.

Les densités aérées indiquées ci-après ont toutes été mesurées par le rhéomètre commercialisé sous la dénomination « FT4 » par la société Freeman Technology.

On précise également que la mesure de l'angle d'avalanche pour les exemples de poudres séchées selon l'état de l'art et les exemples de semoules de granulés selon l'invention est faite selon une même méthode et un même appareil.

L'angle d'avalanche permet d'évaluer la coulabilité des milieux granulaires.

Les inventeurs ont privilégié cette méthode de mesure, car ils pensent que la mesure de l'angle de rotation du tambour est la seule qui soit indépendante de l'action d'un opérateur. Ainsi, le tambour rotatif en tournant sur lui-même, met le milieu granulaire en mouvement. La coulabilité d'une poudre ou plus généralement d'un milieu granulaire sous contrainte normale nulle peut être déterminée par le biais de l'angle d'avalanche, qui est une mesure dynamique. A ce sujet, on pourra se reporter à la publication [5].

Les angles d'avalanche indiqués ci-après ont été tous mesurés à l'aide de l'analyseur de poudres, commercialisé sous la dénomination « Révolution » par la société Mercury Scientific Inc. Il consiste en un tambour contenant un volume précis de poudre mis en rotation devant une caméra.

L'opérateur peut déterminer la vitesse de rotation du tambour et le temps de préparation de l'échantillon, i.e. le temps pendant lequel le tambour tourne sans mesurer l'angle d'avalanche pour annuler l'effet de l'opérateur qui a versé la poudre. Des algorithmes déterminent l'angle d'avalanche de la poudre à partir des images recueillies par la caméra.

L'angle d'avalanche $\theta$ est l'angle que forme la surface libre de la poudre avec l'horizontale juste avant qu'elle ne s'écoule à cause de la rotation du tambour. Ainsi, dans la méthode de mesure mise en œuvre selon l'invention, l'angle d'avalanche $\theta$ peut être défini comme l'angle maximal, mesuré en degré, de rotation d'un tambour rotatif autour de son axe à l'horizontal, qu'atteint l'interface entre le milieu granulaire et le milieu ambiant juste avant l'avalanche dudit milieu granulaire.

On précise également que la détermination de granulométrie pour les exemples de poudres séchées selon l'état de l'art et les exemples de semoules de granulés selon l'invention est faite selon une même méthode et un même appareil par analyse vidéo.

Les inventeurs ont ainsi utilisé un appareil de vidéo-granulométrie commercialisé sous la dénomination « Camsizer » par la société Horiba. Cet appareil fournit grâce à l'analyse d'images numériques des informations rapides et précises sur la taille et la forme des particules pour des matériaux solides secs et qui s'écoulent dans une gamme de tailles entre 30 microns jusqu'à 30mm.

Plus précisément, cet appareil collecte de nombreuses images des particules de poudres ou semoules selon l'invention qui passent devant ses caméras, dispersées par un jet d'air. Les images en deux dimensions sont ramenées à des objets tridimensionnels en fournissant des hypothèses à un logiciel. Typiquement pour les poudres de bois, les hypothèses sont que les particules sont assimilées à des cylindres. Le logiciel fournit ensuite les distributions granulométriques des poudres ou semoules, en pourcentages en nombre de particules dont le diamètre est inférieur à une dimension donnée.

On précise enfin que les tests de cisaillement pour les exemples de poudres séchées selon l'état de l'art et les exemples de semoules de granulés selon l'invention est faite selon une même méthode et un même appareil.

Un test de cisaillement permet de tracer le lieu de rupture, (aussi appelé lieu d'écoulement) de la poudre, c'est-à-dire l'évolution de la contrainte de cisaillement en fonction de la contrainte normale appliquée au milieu granulaire.

Un test de cisaillement donne accès à plusieurs paramètres, comme le coefficient de friction statique de la poudre ou sa cohésion. Ce test est mené à l'aide d'une cellule de cisaillement, dont il existe plusieurs types.

Le mode opératoire d'un test cisaillement utilisé par les inventeurs applique la méthode de Jenike telle que décrite dans la publication [6].

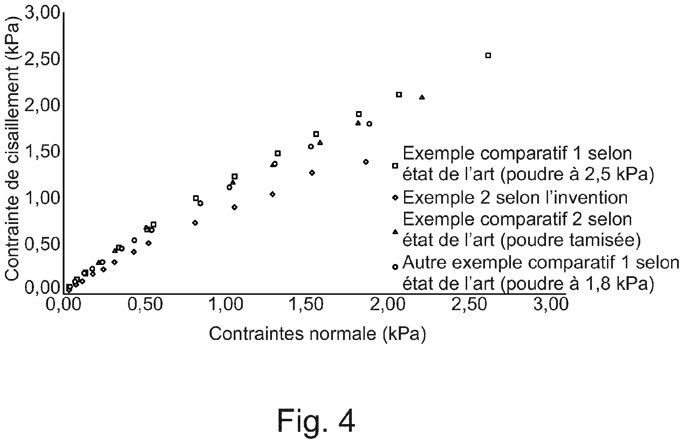

Les valeurs de contraintes de cisaillement indiquées ci-après et reportées en figure 4 ont toutes été mesurées par le rhéomètre commercialisé sous la dénomination « FT4 » par la société Freeman Technology.

Dans cet appareil, la cellule de cisaillement qui a été utilisée est de type torsionnelle, avec comme instruments nécessaires aux différentes étapes du test fixés dans l'appareil puis mis en mouvement automatiquement, une hélice, un piston et une tête de cisaillement structurée.

La figure 1 montre l'enchaînement des étapes du procédé de gazéification selon l'invention, appliqué à du bois en tant que biomasse ligno-cellulosique.

Etape a/: Des plaquettes de bois sont tout d'abord séchées.

Etape b/: A la sortie de l'unité de séchage, ces plaquette séchées subissent un broyage fin de sorte à obtenir une poudre sèche.

Etape c/: Au lieu d'essayer convoyer et d'injecter cette poudre sèche dans un gazéifieur, comme usuellement, les inventeurs ont pensé à introduire une étape de granulation humide qui permet d'obtenir des agrégats de particules, ou granulés, formant une semoule, par ajout d'un liant, et ainsi d'améliorer les propriétés d'écoulement de la poudre, par modification de la forme et augmentation de la taille des particules.

Etape d/: Les granulés humides formant la semoule de bois obtenue sont ensuite séchés en aval.

Etape d1/: Lorsque les granulés séchés ont une taille qui ne permet pas d'envisager de respecter les temps de séjour courts requis par une gazéification, alors on réalise un tamisage desdits granulés.

Ainsi, seuls les granulés, de dimension inférieure à une valeur seuil, seront injectés dans le réacteur de gazéification.

Etape e/: La semoule sèche de bois injectée dans le réacteur produit par gazéification un gaz de synthèse.

Les inventeurs ont procédé à plusieurs essais de granulation humide d'une poudre séchée de bois afin de valider l'obtention de granulés adaptés à une gazéification.

Les exemples de réalisation de semoules de bois selon l'invention sont indiqués ci-après.

Les caractéristiques de la poudre de bois séchée, à partir de laquelle ces exemples de semoule sont obtenus par granulation humide, sont indiquées dans le tableau 1 ci-dessous.

**TABLEAU 1**

| | | |
|---|---|---|
| Diamètres (microns) | d10 | 14,6 |
| | d50 | 37,7 |
| | d95 | 104,1 |
| Etalement de la distribution granulométrique | (d90-d10)/d50 | 2 |
| Autres caractéristiques | Densité aérée (kg/m$^3$) | 206 |
| | Angle d'avalanche $\theta$ (°) | 72 |
| | Cohésion à 3kPa (kPa) | 0,99 |

Les caractéristiques de cette poudre de bois sèche en font une poudre qui s'écoule difficilement par rapport à des poudres non-cohésives comme la semoule de blé et le sucre en poudre, dont les cohésions à 3kPa sont d'environ 0,01 et 0,05 kPa respectivement, et leur angle d'avalanche autour de 40°.

Exemple 1 selon l'invention :

La poudre de bois sèche est mélangée à de l'amidon, dont la proportion massique est comprise entre 5 et 10% en masse de la poudre.

Le mélange est réalisé dans un bac, puis de l'eau est ajoutée par pulvérisation en petites quantités.

La poudre sèche ne se granule qu'une fois que de l'eau se trouve en surface et forme des ponts liquides entre les particules de poudre.

Ainsi, l'eau ajoutée permet de former des ponts liquides entre les particules. Ces ponts liquides contiennent de l'amidon qui en séchant va former des ponts solides entre les particules de biomasse et donc les lier ensemble.

Le mélange est homogénéisé à la main et le bac secoué de manière circulaire de sorte que la poudre roule sur elle-même. De petits agrégats, de dimensions inférieures au cm se forment.

Le mélange est ensuite mis sur des supports plats en aluminium selon une répartition en couches assez fine pour permettre un séchage efficace.

Puis les supports contenant le mélange sont placés dans une étuve à température ambiante pendant une durée d'environ 8h.

Un séchage efficace est réalisé préférentiellement pour n'évaporer que l'eau libre, c'est-à-dire une quantité d'environ 75% de l'eau ajoutée, qui forme les ponts liquides, et de ne pas évaporer l'eau lié, soit la quantité restante d'eau de l'ordre de 25%. Cette quantité restante d'eau liée, ne change pas les propriétés d'écoulement et requiert en pratique beaucoup d'énergie pour l'évaporer.

La semoule de granulés obtenue est ensuite tamisée avec une grille de maille de l'ordre de 900 microns. Les granulés de moins de 900 microns passent ainsi à travers la grille et constitue l'exemple 1 de semoule selon l'invention. On précise que les granulés au-dessus de 900 microns peuvent être broyés puis recyclés.

Exemple 2 selon l'invention :

Un gel d'amidon est préparé par ébullition d'une poudre d'amidon dans de l'eau.

La poudre de bois sèche est placée dans un bac puis est mélangé avec le gel d'amidon préparé. L'ajout du gel se fait par pulvérisation de petites quantités. La proportion massique finale du gel d'amidon est comprise entre 5 et 10% d'amidon par rapport à la masse de poudre de bois sèche.

Le mélange est homogénéisé à la main et le bac secoué de manière circulaire de sorte que la poudre roule sur elle-même. De petits agrégats, de dimensions inférieures au cm se forment.

Le mélange est ensuite mis sur des supports plats en aluminium selon une répartition en couches assez fine pour permettre un séchage efficace.

Puis les supports contenant le mélange sont placés dans une étuve à température ambiante pendant une durée d'environ 8h.

La semoule de granulés obtenue est ensuite tamisée avec une grille de maille de l'ordre de 900 microns. Les granulés de moins de 900 microns passent ainsi à travers la grille et constitue l'exemple 2 de semoule selon l'invention. On précise que les granulés au-dessus de 900 microns peuvent être broyés puis recyclés.

Exemple 3 selon l'invention:

Une semoule de bois a été fabriquée avec les mêmes conditions et mêmes étapes que celles de l'exemple 1 mais en remplaçant l'amidon par de la poudre issue de tourteau de tournesol séché et broyée, dans une proportion entre 5 et 10% en masse par rapport à la poudre de bois.

Les inventeurs ont procédé à plusieurs observations et analyse des semoules de granulés obtenus.

A l'œil nu, contenues dans un flacon, on constate tout d'abord que les semoules selon les exemples 1 à 3 de l'invention s'écoulent facilement dans le flacon, contrairement à la poudre de bois qui s'écoule par blocs, et il est nécessaire d'incliner fortement le flacon pour voir cette dernière s'écouler.

Des observations de semoules selon les exemples 1 et 3 de l'invention, ont ensuite réalisées à la loupe binoculaire.

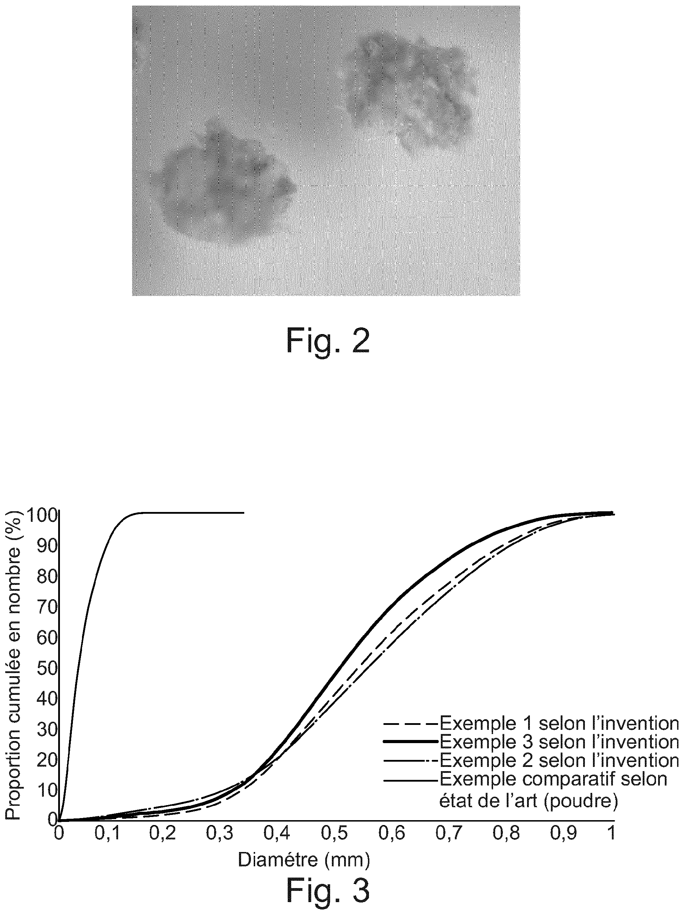

La figure 2 montre sous un grossissement de x63, des granulés de l'exemple 1 selon l'invention avec 10% en masse d'amidon, étant précisé que l'échelle est indiquée par le trait en bas de la figure, dont la longueur vaut 100 microns.

Ainsi, il ressort de cette figure 2 que les agrégats ou granulés sont de forme proche de la sphère. Quelques particules pointent en dehors de l'agrégat. La forme générale et l'augmentation de la taille expliquent l'amélioration de l'écoulement par rapport à la poudre sèche de bois selon l'état de l'art.

On a également procédé à l'évaluation de la granulométrie des semoules selon les exemples 1 et 3 de l'invention.

Les différentes distributions granulométriques sont représentées sous forme de courbes en figure 3.

A la lecture de ces courbes, on constate que la granulométrie des semoules de granulés de bois selon l'invention est très différente de celle de la poudre sèche de bois selon l'état de l'art.

Ainsi, les semoules contiennent peu de particules fines et sont donc moins soumises aux forces cohésives et leurs diamètres $d_{50}$, $d_{90}$ et $d_{10}$ sont autour respectivement de 500 microns, 800 microns et 300 microns.

L'étalement de la distribution granulométrique, qui correspond à la valeur $(d_{90}-d_{10})/d_{50}$ est environ égal à un pour les semoules selon l'invention, tandis qu'il est de l'ordre de deux pour la poudre sèche de bois selon l'état de l'art.

Or, d'après ce que l'on connaît par la bibliographie sur l'écoulement des milieux granulaires, une distribution plus resserrée améliore l'écoulement.

Autrement dit, la granulation humide des poudres de biomasse, en augmentant le diamètre des particules pour la transformer en semoules de granulés, peut permettre d'obtenir un meilleur écoulement.

Les inventeurs ont validé par d'autres essais, le meilleur écoulement obtenu par les semoules de bois selon l'invention.

Ils ont ainsi procédé à la comparaison des exemples suivants :

- Exemple 1 comparatif selon l'état de l'art : poudre sèche de bois;
- Exemple 2 comparatif selon l'état de l'art : poudre sèche de bois tamisée à 900 $\mu$m;
- Exemple 2 selon l'invention : semoule à partir de la même poudre sèche de bois que celle des exemples comparatifs 1 et 2.

Trois paramètres peuvent permettre de déterminer et comparer la coulabilité entre poudres selon l'état de l'art et semoules selon l'invention:

- la position relative des lieux d'écoulement,
- la cohésion,
- l'angle d'avalanche.

Pour caractériser l'aptitude d'un milieu granulaire à s'écouler, les inventeurs ont mis en œuvre un test de cisaillement.

Au préalable, pour déterminer la contrainte normale à laquelle effectuer le test de cisaillement on calcule la contrainte maximale que va subir chaque milieu (poudre séchée, poudre séchée et tamisée) dans un silo de stockage de forme cylindrique de 2m de diamètre, en appliquant la théorie dit théorie de Janssen.

En appliquant cette théorie, la contrainte normale maximale subie par la poudre dans le silo cylindrique est alors donnée pas l'équation suivante :

$$\sigma sat = (g * \rho * R)/(2 * K * \mu)$$

avec :

$\sigma$sat : contrainte normale maximale subie par la poudre (Pa)
g : accélération de la pesanteur (m/s$^2$)
R : rayon du silo (m)
K : rapport entre les contraintes normale et radiale (-)
$\mu$ : coefficient de friction statique (radians).

La valeur de K n'étant pas mesurable directement dans le silo, on la considère ici égale à 0,4 pour faire une estimation de la contrainte, les valeurs typiques de K étant comprises entre 0,3 et 0,6.

Les résultats des différents tests sont présentés dans le tableau 2 ci-dessous.

On précise que les inventeurs ont pensé que la semoule de bois selon l'exemple 2 de l'invention pouvait repartir en poudre lors du test de cisaillement. La contrainte maximale de cisaillement obtenue pour la semoule selon l'invention étant de 1,8 kPa, un test de cisaillement a été également effectué pour un autre exemple comparatif 1, qui a une contrainte à 1,8kPa.

**TABLEAU 2**

| Paramètres | Contrainte maximale (kPa) | Densité aérée (kg/m$^3$) | Angle d'avalanche $\theta$ (°) | Cohésion (kPa) |
|---|---|---|---|---|
| Exemple comparatif 1 selon état de l'art (poudre à 2,5kPa) | 2,5 | 0,206 | 72 | 0,084 |
| Exemple 2 selon l'invention (semoule) | 1,8 | 0,152 | 55 | 0,042 |
| Exemple comparatif 2 selon état de l'art (poudre tamisée) | 2,1 | 0,179 | 65 | 0,083 |
| Autre exemple comparatif 1 selon état de l'art (poudre à 1,8kPa) | - | 0,206 | 72 | 0,072 |

On a reporté sous la forme de courbes, pour chacun des exemples précités, l'évolution de la contrainte de cisaillement en fonction de la contrainte normale appliquée à l'échantillon.

Les courbes sont illustrées en figure 4.

Du tableau 2 et de la figure 4, on constate que :

- le lieu d'écoulement de la semoule selon l'invention est en dessous de celui l'autre exemple comparatif 1 de la poudre de bois, à 1,8kPa de contrainte maximale. Il en va de même avec la cohésion puisque la valeur de cohésion de la semoule vaut 0,042kPa contre 0,072 kPa pour l'autre exemple comparatif 1. On peut en conclure que la semoule de bois selon l'invention ne repart pas en poudre lors du test de cisaillement.
- le lieu d'écoulement de la semoule selon l'invention est en dessous de celui l'exemple comparatif 1 de la poudre de bois, à 2,5 kPa de contrainte maximale. Il en va de même avec la cohésion puisque la valeur de cohésion de la semoule vaut 0,042kPa contre 0,08 kPa pour l'exemple comparatif 1, ainsi que pour la valeur d'angle d'avalanche puisqu'égal à 55° contre 72°.
- le lieu d'écoulement de la semoule selon l'invention est en dessous de celui l'exemple comparatif 2 de la poudre de bois tamisée. Il en va de même avec la cohésion puisque la valeur de cohésion de la semoule vaut 0,042kPa contre 0,082 kPa pour l'exemple comparatif 2, ainsi que pour la valeur d'angle d'avalanche puisqu'égal à 55° contre 65°.

De ces essais, on peut en conclure qu'une semoule de bois obtenue selon l'invention s'écoule mieux que la même poudre sèche de bois dont elle est issue que cette dernière soit ou non tamisée.

De fait, la forme d'un granulé de la semoule selon l'invention, qui est plus proche de la sphère, lui permet de mieux s'écouler que les aiguilles de poudres sèches de bois. De même, la distribution granulométrique d'une semoule selon l'invention est plus resserrée et elle contient moins de fines que les poudres sèches de bois.

D'autres variantes et avantages de l'invention peuvent être réalisés sans pour autant sortir du cadre de l'invention.

L'invention n'est pas limitée aux exemples qui viennent d'être décrits; on peut notamment combiner entre elles des caractéristiques des exemples illustrés au sein de variantes non illustrées.

## Références citées

[1]: «Mise en œuvre des poudres - *Techniques de granulation humide et liants»,* Techniques de l'ingénieur réf J2254 v1.

[2]: «Agglomeration technology: Equipment selection» de B. J. Ennis, Chem. Eng., vol. 117, no. 5, pp. 50-54, 2010.

[3]: « Granulation of lignocellulosic powders», V. Yandapalli, University of Georgia, 2013.

[4] : « Volatiles species release during torrefaction of wood and its macromolecular constituents : part 1- Expérimental Study », T. Nocquet et al., Energy 72, pp 180-187, 2014.

[5] : « Avalanching flow of cohesive powders », A. Alexander et al., Powder Technology 164, pp 13-21, 2006.

[6] : « Powders and Bulk Solids, Behavior, Characterization, Storage and Flow », Chapter 4 « Practical determination of flow properties », pp 75-99, D. Schulze, Springer, 2008.

## Revendications

1. Procédé de gazéification de biomasse, comprenant les étapes successives suivantes :

   a/ séchage d'une biomasse ;
   b/ broyage de la biomasse afin d'obtenir une poudre sèche,
   c/ granulation humide de la poudre de biomasse pour obtenir des granulés de biomasse sous la forme d'une semoule ;
   d/ séchage des granulés de semoule ;
   e/ injection de la semoule sèche dans un réacteur de gazéification.

2. Procédé selon la revendication 1, l'étape e/ étant une injection dans un réacteur de gazéification à flux entraîné (RFE).

3. Procédé selon la revendication 1 ou 2, la biomasse étant de la biomasse ligno-cellulosique.

4. Procédé selon l'une des revendications 1 à 3, l'étape c/ de granulation humide étant réalisée par ajout à la poudre d'un liant choisi parmi l'amidon, la drêche de féculerie, des déchets agricoles comprenant des déchets de canne à sucre et/ou des pépins de raisin, et/ou des drêches de palmier à huile et/ou des déchets de sorgho et/ou des grignons d'olive et/ou des coques de graines de tournesol, des écorces d'agrumes, des micro-algues, des algues, du lactosérum ou un mélange de ceux-ci.

**5.** Procédé selon la revendication 4, la proportion massique de liant par rapport à celle de la poudre étant comprise entre 0 et 90%.

**6.** Procédé selon la revendication 4 ou 5, un liquide étant ajouté directement par pulvérisation dans le mélange entre liant et poudre.

**7.** Procédé selon la revendication 4 ou 5, le liant étant mélangé à un liquide, le mélange étant chauffé de sorte à obtenir un gel ajouté par pulvérisation dans la poudre.

**8.** Procédé selon l'une des revendications 4 à 7, le liant étant l'amidon, dont la proportion massique est comprise entre 5 et 10% de celle de la poudre.

**9.** Procédé selon l'une des revendications précédentes, comprenant en outre, après l'étape d/, une étape dl/ de tamisage de la semoule séchée.

**10.** Procédé selon l'une des revendications précédentes, les granulés secs obtenus, éventuellement après l'étape dl/ de tamisage, et avant l'étape d'injection e/, ayant un diamètre représentatif inférieur à 1 mm.

**11.** Installation de gazéification en continu de biomasse comprenant un réacteur de gazéification et en amont de celui-ci un dispositif de mise en œuvre de la granulation humide de poudre séchée de biomasse, destinée à mettre en œuvre l'étape c/ du procédé selon l'une quelconque des revendications précédentes.

**Patentansprüche**

**1.** Verfahren zum Vergasen von Biomasse, umfassend die folgenden aufeinanderfolgenden Schritte:

a/ Trocknen einer Biomasse;
b/ Mahlen der Biomasse, um ein trockenes Pulver zu erhalten,
c/ Nassgranulation des Biomassepulvers, um Biomassekörnchen in Form eines Grießes zu erhalten;
d/ Trocknen der Grießkörnchen;
e/ Einleiten des trockenen Grießes in einen Vergasungsreaktor.

**2.** Verfahren nach Anspruch 1, wobei der Schritt e/ ein Einleiten in einen Flugstromvergasungsreaktor (EFR) ist.

**3.** Verfahren nach Anspruch 1 oder 2, wobei die Biomasse lignocellulosehaltige Biomasse ist.

**4.** Verfahren nach einem der Ansprüche 1 bis 3, wobei der Schritt c/ der Nassgranulation durch Zugeben, zu dem Pulver, eines Bindemittels ausgeführt wird, das unter Stärke, Treber aus der Stärkeherstellung, landwirtschaftlichen Abfällen, die Zuckerrohr- und/oder Traubenkernabfälle und/oder Ölpalmentreber und/oder Sorghumabfälle und/oder Oliventrester und/oder Sonnenblumenkernschalen umfassen, Schalen von Zitrusfrüchten, Mikroalgen, Algen, Molke oder einer Mischung davon ausgewählt ist.

**5.** Verfahren nach Anspruch 4, wobei der Massenanteil des Bindemittels im Verhältnis zu dem des Pulvers zwischen 0 und 90 % beträgt.

**6.** Verfahren nach Anspruch 4 oder 5, wobei eine Flüssigkeit direkt durch Sprühen in die Mischung aus Bindemittel und Pulver zugegeben wird.

**7.** Verfahren nach Anspruch 4 oder 5, wobei das Bindemittel mit einer Flüssigkeit gemischt wird, wobei die Mischung so erwärmt wird, dass ein Gel erhalten wird, das durch Sprühen in das Pulver zugegeben wird.

**8.** Verfahren nach einem der Ansprüche 4 bis 7, wobei das Bindemittel Stärke ist, deren Massenanteil zwischen 5 und 10 % desjenigen des Pulvers beträgt.

**9.** Verfahren nach einem der vorhergehenden Ansprüche, umfassend ferner, nach dem Schritt d/, einen Schritt d1/ des Siebens des getrockneten Grießes.

**10.** Verfahren nach einem der vorhergehenden Ansprüche, wobei die erhaltenen trockenen Körnchen, gegebenenfalls nach dem Schritt dl/ des Siebens und vor dem Schritt des Einleitens e/, einen repräsentativen Durchmesser von weniger als 1 mm aufweisen.

**11.** Anlage zur kontinuierlichen Vergasung von Biomasse mit einem Vergasungsreaktor und stromauf von diesem einer Vorrichtung zur Durchführung der Nassgranulation von getrocknetem Biomassepulver, die dazu bestimmt ist, den Schritt c/ des Verfahrens nach einem der vorhergehenden Ansprüche durchzuführen.

**Claims**

**1.** Process for the gasification of biomass, comprising the following successive stages:

> a/ drying a biomass;
> b/ grinding the biomass in order to obtain a dry powder,
> c/ wet granulation of the biomass powder in order to obtain biomass granules in the form of a semolina;
> d/ drying of the semolina granules;
> e/ injection of the dry semolina into a gasification reactor.

**2.** Process according to Claim 1, stage e/ being an injection into an entrained flow gasification reactor (EFR) .

**3.** Process according to Claim 1 or 2, the biomass being lignocellulose biomass.

**4.** Process according to one of Claims 1 to 3, the wet granulation stage c/ being carried out by addition to the powder of a binder chosen from starch, starch industry spent grains, agricultural waste comprising sugarcane and/or grape seed waste, and/or spent oil palm bunches and/or sorghum waste and/or olive cakes and/or sunflower seed hulls, citrus fruit peel, microalgae, algae, whey or a mixture of these.

**5.** Process according to Claim 4, the proportion by weight of binder with respect to that of the powder being between 0% and 90%.

**6.** Process according to Claim 4 or 5, a liquid being added directly by spraying in the mixing between binder and powder.

**7.** Process according to Claim 4 or 5, the binder being mixed with a liquid, the mixture being heated so as to obtain a gel added by spraying into the powder.

**8.** Process according to one of Claims 4 to 7, the binder being starch, the proportion by weight of which is between 5% and 10% of that of the powder.

**9.** Process according to one of the preceding claims, additionally comprising, after stage d/, a stage dl/ of sieving the dried semolina.

**10.** Process according to one of the preceding claims, the dry granules obtained, optionally after the sieving stage dl/, and before the injection stage e/, having a representative diameter of less than 1 mm.

**11.** Plant for the continuous gasification of biomass comprising a gasification reactor and, upstream of the latter, a device for carrying out the wet granulation of dried biomass powder, intended to carry out stage c/ of the process according to any one the preceding claims.

Fig. 1

Fig. 2

Fig. 3

Fig. 4

## RÉFÉRENCES CITÉES DANS LA DESCRIPTION

**Documents brevets cités dans la description**

- WO 2013114327 A1

**Littérature non-brevet citée dans la description**

- **B. J. ENNIS.** Agglomeration technology: Equipment selection. *Chem. Eng.,* 2010, vol. 117 (5), 50-54
- **V. YANDAPALLI.** Granulation of lignocellulosic powders. *University of Georgia,* 2013
- **T. NOCQUET et al.** Volatiles species release during torrefaction of wood and its macromolecular constituents : part 1- Expérimental Study. *Energy,* 2014, vol. 72, 180-187
- **A. ALEXANDER et al.** Avalanching flow of cohesive powders. *Powder Technology,* 2006, vol. 164, 13-21
- Powders and Bulk Solids, Behavior, Characterization, Storage and Flow. **D. SCHULZE.** Practical determination of flow properties. Springer, 2008, 75-99